# EUROPÄISCHE PATENTSCHRIFT

(11) **EP 0 424 404 B1**
(45) Veröffentlichungstag und Bekanntmachung des Hinweises auf die Patenterteilung: **17.03.1993**
(21) Anmeldenummer: 89906361.4
(22) Anmeldetag: 27.04.1989
(51) Int. Cl.: H02G 11/00, H01R 35/02, F16G 13/16

(54) **ENERGIEFÜHRUNGSTRÄGER**
ENERGY-TRANSMITTING CARRIER
CONDUIT D'ENERGIE

(30) Priorität: 08.07.1988 DE 3823218
(43) Veröffentlichungstag der Anmeldung: 02.05.1991
(73) Patentinhaber: U.I. LAPP GMBH & CO. KG, D-70565 Stuttgart (DE)
(72) Erfinder: STUDENSKI, Udo, D-7730 Villingen-Schwenningen (DE)
(74) Vertreter: Hoeger, Stellrecht & Partner
(86) Internationale Anmeldenummer: EP8900465
(87) Internationale Veröffentlichungsnummer: WO9000824

(56) Entgegenhaltungen:
- EP-A- 0 126 862
- FR-A- 2 178 296
- FR-A- 2 212 077
- US-A- 3 448 953

## Beschreibung

Die Erfindung betrifft einen Energieführungsträger nach dem Oberbegriff des Patentanspruches 1.

Ein solcher Energieführungsträger ist aus EP-A-0126862 bekannt.

Die flexiblen, vorzugsweise mehrgliedrigen Aufnahmen bekannter Energieführungsträger sind gewöhnlich als mehr oder weniger offene Ketten, geschlossene Gelenkrohre oder Schläuche ausgebildet und umschließen die geführten Kabel, Schläuche oder dergleichen ganz oder teilweise. Dabei ist jeweils das letzte Glied der Kette oder des Rohres bzw. des Schlauches mit einem Maschinenteil fest verbunden, z.B. verschraubt. Die einzelnen, in der Aufnahme angeordneten Kabel, Schlauche oder dergleichen müssen dann jeweils einzeln mit den entsprechenden Kabeln, Schläuchen oder dergleichen an den Maschinenteilen verbunden werden. Umgekehrt müssen bei einem Ablösen des Energieführungsträgers von den Maschinenteilen die einzelnen Kabel, Schlauche oder dergleichen wieder einzeln voneinander getrennt werden. Auf diese Weise erfordert der Ein- und Ausbau der bekannten Energieführungsträger einen erheblichen Zeitaufwand.

Ein Energieführungsträger anderer Art, nämlich in Gestalt eines unflexiblen, lediglich linear extensiblen Pantographen mit endseitig starr angeordneten Buchsenelementen ist aus FR-A-2212077 bekannt.

Es ist Aufgabe der Erfindung, einen gattungsgemäßen Energieführungsträger so auszubilden, daß die in ihm enthaltenen Kabel, Schläuche oder dergleichen in einfachster Weise und ohne nennenswerten Zeitaufwand mit den entsprechenden Kabeln, Schläuchen oder dergleichen an den Maschinenteilen verbunden bzw. von diesen wieder getrennt werden können.

Die Aufgabe wird erfindungsgemäß dadurch gelöst, daß an dem einen Ende der flexiblen Führungskette gelenkig ein Stecker- und an dem anderen Ende der Führungskette ein Buchsenelement angeordnet ist, daß diese Elemente einerseits an die Kabel, Schläuche oder dergleichen angeschlossen und andererseits durch Steckverbindungen mit entsprechenden Elementen an den Maschinenteilen lösbar verbindbar sind, und daß die Stecker- und Buchsenelemente an der Führungskette bzw. an den Maschinenteilen relativ zueinander bewegliche, von der Außenseite der Stecker- und Buchsenelemente her zu betätigende, miteinander in Eingriff bringbare und wieder lösbare Verriegelungselemente
aufweisen, durch welche die Stecker- und Buschenelemente wechselseitig aneinander fixierbar sind.

Die nachstehende Beschreibung einer bevorzugten Ausführungsform der Erfindung dient im Zusammenhang mit beiliegender Zeichnung der weiteren Erläuterung. Es zeigen:
Figur 1 in abgebrochener, schlaubildlicher Darstellung eine Gelenkführungskette mit Kabeln und Schläuchen und
Figur 2 schematisch eine verriegelbare Steckverbindung zwischen den Gelenkführungskette aus Figur 1 und einem Maschinenteil.

Der auf der Zeichnung dargestellte Energieführungsträger umfaßt als flexible Aufnahme 1 für Kabel, Schläuche oder dergleichen eine mehrgliedrige Gelenkführungskette, deren einzelne Glieder 2 in bekannter Weise gelenkig miteinander verbunden sind. Zwischen einzelnen Gelenkgliedern 2 erstrecken sich Querstege 3. Durch entsprechende Öffnungen in den Querstegen 3 verlaufen zwei Kabel 4, 5 und ein Schlauch 6. Auf die Ausbildung der Gelenkführungskette kommt es für die Erfindung nich an. Die Aufnahme 1 könnte auch als flexibles, mehrgliedriges Gelenkführungsrohr für Kabel, Schläuche oder dergleichen ausgebildet sein.

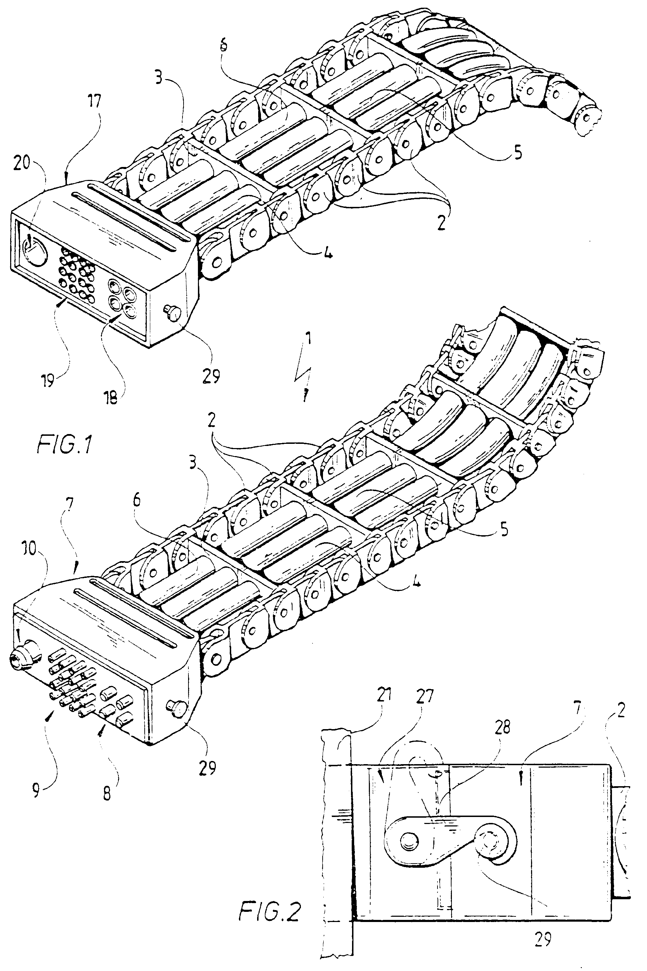

Wie dargestellt, ist an dem einen, in Figur 1 unten gelegenen, Ende der flexiblen Aufnahme 1 gelenkig ein Steckerelement 7 angeordnet. Die Gelenkverbindung zwischen diesem Element und der Aufnahme 1 kann den Gelenkverbindungen der einzelnen Kettenglieder entsprechen. Das Steckerelement 7 weist an seiner Vorderseite mehrere Steckerstifte 8, 9, 10 auf. Die Steckerstifte 8 umfassen eine Gruppe von vier, die Steckerstifte 9 eine Gruppe von sechzehn Steckerstiften, während der Steckerstift 10 hohl ausgebildet ist. Die Steckerstifte 8 sind mit vier vom Kabel 4 umschlossenen Leitern verbunden, die der Energiezuführung (Starkstrom) dienen. Die Steckerstifte 9 sind mit elektrischen Steuerleitungen verbunden, die vom Kabel 5 umschlossen sind. Der hohle Stecker 10 ist abgedichtet mit dem Schlauch 6 verbunden.

Am anderen, in Figur 1 oben liegenden, Ende der Aufnahme 1 ist gelenkig ein Buchsenelement 17 mit der Aufnahme 1 verbunden, wobei die Gelenkverbindung der Gelenkverbindung des Steckerelementes 7 mit der Aufnahme 1 entsprechen kann. Das Buchsenelement 17 umfaßt drei Gruppen von Buchsen 18, 19, 20. Die Buchsen 18 sind mit den an die Steckerstifte 8 angeschlossenen Leitern des Kabels 4, die Buchsen 19 mit den an die Steckerstifte 9 angeschlossenen Leitungen des Kabels 5 verbunden. Die Buchse 20 ist an den Schlauch 6 angeschlossen. Die beschriebenen Stecker und Buchsen sind vorzugsweise zueinander komplementär, so daß grundsätzlich auch die Stecker 8, 9, 10 in die Buchsen 18, 19, 20 eingeführt werden könnten.

Wenn mit Hilfe der dargestellten und beschriebenen Aufnahme 1 eine Verbindung zwischen zwei relativ zueinander beweglichen Maschinenteilen, beispielsweise dem ortsfesten Maschinengestell und dem verschieblichen Werkzeugschlitten einer Fräsmaschine hergestellt werden soll, wird das Steckerelement 7 in ein an der Maschine stationär vorgesehenes Buchsenelement, beispielsweise entsprechend dem Buchsenelement 17, eingeführt, und das Buchsenelement 17 mit einem ebenfalls stationär an der Maschine angeordneten Steckerelement, beispielsweise entsprechend dem Steckerelement 7, verbunden. Das stationäre Steckerelement kann beispielsweise am Maschinengestell, das stationäre Buchsenelement beispielsweise am Werkzeugschlitten angeordnet sein. Auf diese Weise läßt sich in einfachster Weise und kürzester Zeit die Aufnahme 1 mit ihren Versorgungsleitungen an die Maschine anschließen oder von da wieder abnehmen.

Die Figur 2 zeigt schematisch an einem ortsfesten oder beweglichen Maschinenteil 21 ein damit fest verbundenes Buchsenelement 27, in welches das Steckerelement 7 aus Figur 1 eingeführt ist. Wie dargestellt, ist am Buschsenelement eine schwenkbare Verriegelungsklinke 28 angeordnet, die mit einem seitlich vom Steckerelement 7 abstehenden Verriegelungsstift 29 in Eingriff bringbar ist. Hierdurch sind Steckerelement 7 und Buchsenelement 27 lösbar miteinander verriegelt, so daß eine unbeabsichtigte Ablösung verhindert ist. Vorzugsweise sind die beschriebenen Verriegelungselemente an beiden Seiten des Steckerelements 7 und des Buchsenelements 27 angeordnet. Entsprechende Verriegelungselement sind auch für das Buchsenelement 17 der Aufnahme 1 vorgesehen.

## Patentansprüche

1. Energieführungsträger mit einer flexiblen Aufnahme (1) für Kabel (4, 5), Schläuche (6) oder dergleichen in Gestalt einer flexiblen, mehrgliedrigen Führungskette, deren einzelne, die Kabel, Schläuche oder dergleichen aufnehmenden Glieder (2) gelenkig miteinander verbunden sind, wobei die Kabel, Schläuche oder dergleichen an beiden Enden der Aufnahme mit entsprechenden Kabeln, Schläuchen oder dergleichen an Maschinenteilen verbindbar sind,
**dadurch gekennzeichnet,**
daß an dem einen Ende der flexiblen Führungskette (1) gelenkig ein Stecker- und an dem anderen Ende der Führungskette ein Buchsenelement (7 bzw. 17) angeordnet ist, daß diese Elemente (7, 17) einerseits an die Kabel, Schläuche (4, 5, 6) oder dergleichen angeschlossen und andererseits durch Steckverbindungen mit entsprechenden Elementen (27) an den Maschinenteilen (21) lösbar verbindbar sind, und daß die Stecker- und Buchsenelemente (7, 17, 27) an der Führungskette (1) bzw. an den Maschinenteilen (21) relativ zueinander bewegliche, von der Außenseite der Stecker- und Buchsenelemente her zu betätigende, miteinander in Eingriff bringbare und wieder lösbare Verriegelungselemente (28, 29) aufweisen, durch welche die Stecker- und Buchsenelemente wechselseitig aneinander fixierbar sind.

2. Energieführungsträger nach Anspruch 1, dadurch gekennzeichnet, daß die Stecker- und Buchsenelemente (7, 17, 27) jeweils unterschiedliche Stecker bzw. Buchsen (8, 9, 10 bzw. 18, 19, 20) für die betreffenden Kabel, Schläuche (4, 5, 6) oder dergleichen enthalten.

## Claims

1. Energy-transmitting carrier with a flexible holder (1) for cables (4, 5), hoses or the like in the form of a flexible, multi-link guide chain, whose individual links (2) which hold the cables, hoses or the like are jointedly-connected to one another, in which the cables, hoses or the like can be connected at both ends of the holder to corresponding cables, hoses or the like on machine parts, characterized in that at one end of the flexible guide chain (1) a plug unit is jointedly mounted and at the other end of the guide chain a socket unit (7 and 17 respectively), that these units (7, 17) are connected on the one hand to the cables, hoses or the like (4, 5, 6) and on the other hand can be separably connected by means of plug-in connections with corresponding units on the machine parts, and that the plug and socket units (7, 17, 27) on the guide chain (1) or on the machine parts (21) have locking elements (28, 29) which can be moved relative to one another, are operated from the outside of the plug and socket units, can be brought into engagement with one another and disconnected again, and by means of which the plug and socket units can be fixed to one another reciprocally.

2. Energy-transmitting carrier for energy lines according to Claim 1, characterised in that the plug and socket units (7, 17, 27) contain in each case different plugs or sockets (8, 9, 10 or 18, 19 20) for the relevant cables, hoses or the like (4, 5, 6).

## Revendications

1. Conduit d'alimentation en énergie avec un élément de soutien (1) flexible pour câbles (4, 5), tuyaux souples (6) ou éléments analogues, se présentant comme une chaîne porteuse flexible à plusieurs maillons dont les maillons (2) élémentaires recevant les câbles, les tuyaux souples ou des éléments analogues sont articulés entre eux, les câbles, les tuyaux souples ou les éléments analogues pouvant être reliés aux deux extrémités de l'élément de soutien à des câbles, des tuyaux souples ou des éléments analogues disposés sur des pièces de machine, caractérisé en ce qu'à l'une des extrémités de la chaîne porteuse (1) flexible, est articulé un élément à broches (7) et, à l'autre extrémité de cette chaîne porteuse est articulé un élément à douilles (17), ces éléments (7, 17) sont, d'une part, raccordés aux câbles, tuyaux souples (4, 5, 6) ou éléments analogues et, d'autre part, peuvent être reliés de façon séparable par des moyens de connexion à des éléments (27) disposés sur les pièces de la machine, et les éléments à broches (7) et les éléments à douilles (17, 27) prévus respectivement sur la chaîne porteuse (1) et sur les pièces de la machine (21) ont des éléments de verrouillage (28, 29) mobiles les uns relativement aux autres, actionnables de la face extérieure des éléments à broches et des éléments à douilles, pour être engagés mutuellement et être détachés à nouveau, à l'aide desquels les éléments à broches et les éléments à douilles peuvent être attachés les uns aux autres.

2. Conduit d'alimentation en énergie selon la revendication 1, caractérisé en ce que les éléments à broches (7) et les éléments à douilles (17, 27) contiennent respectivement des broches (8, 9, 10) différentes et des douilles (18, 19, 20) différentes pour les câbles, les tuyaux souples (4, 5, 6) ou les éléments analogues correspondants.
